# EUROPEAN PATENT APPLICATION

(11) **EP 3 518 054 A1**
(43) Date of publication of application: **31.07.2019**
(21) Application number: 19153116.9
(22) Date of filing: 22.01.2019
(51) Int. Cl.: G05B 19/042, G06F 13/40, H05K 7/14

(54) **BACKPLANE-BASED PLC SYSTEM WITH HOT SWAP FUNCTION**

(30) Priority: 30.01.2018 KR 20180011092
(71) Applicant: LSIS Co., Ltd., Gyeonggi-do 14119 (KR)
(72) Inventor: Lee, Geon-Ho, Anyang-si, Gyeonggi-do 14118 (KR)
(74) Representative: K&L Gates LLP

(57) **Abstract**

The present disclosure provides a serial backplane based PLC system with a hot swap function in which when an extended module fails during communication between the backplane master unit and the backplane slave unit, communication between the backplane master unit and the backplane slave unit via the backplane bus is maintained using a backplane design technique. The system includes a central processor unit (CPU) module for transmitting an operation command; at least one extended module for receiving and processing the operation command; a backplane bus connected to a bus line for communication between the CPU module and the extended modules; and at least one backplane module connected to the backplane bus, wherein the at least one backplane module is physically detachably coupled to the at least one extended module, respectively.

## Description

### BACKGROUND

### 1. Technical Field

The present disclosure relates to a programmable logic controller (PLC) backplane, and more specifically, to a Ethernet-based serial backplane based PLC system with a hot swap function.

### 2. Description of the Related Art

Backplane technology is configured to effectively connect multiple modules via a single bus system.

A backplane for a traditional programmable logic controller (PLC) system may employ a data bus to share data between various modules. At present, a performance of the backplane is influential on an overall performance of the PLC system and is an important technology for ensuring reliability for data exchange.

Figure 1 shows a conventional backplane-based PLC system. As shown in Figure 1, the backplane-based PLC system includes one CPU module 10 with a backplane master unit 12 in a MPU 11, a plurality of extended modules 20a 20b 20c each having a backplane slave unit 22 inside a MPU 21, and a serial backplane bus 30 consisting of one bus that enables communication between the backplane master unit 12 and the backplane slave unit 22.

In this connection, only a single backplane master unit 12 exists in the backplane-based PLC system. The backplane master unit 12 controls all backplane slave units 22 connected in a serial manner. That is, all backplane slave units 22 are controlled by the backplane master unit 12.

Figure 2 is a schematic diagram illustrating a problem occurring in the backplane-based PLC system of Figure 1.

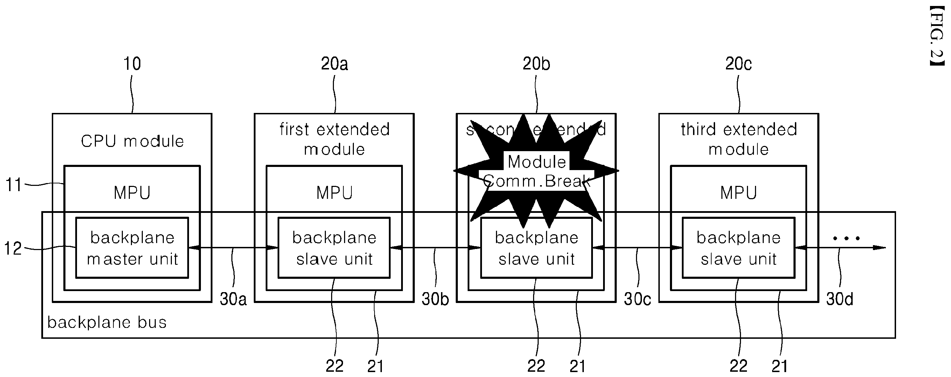

As shown in FIG. 2, the backplane master unit 12 provided in the MPU 11 of the CPU module 10 may provide an operation order for the backplane slave unit 22 provided in the MPU 21 of each of the first, second, and third extended modules 20a 20b and 20c connected via the serial backplane bus 30.

Each backplane slave unit 22 waits for a command from the backplane master unit 12. Then, each backplane slave unit 22 receives and processes the command from the backplane master unit 12 via the serial backplane bus 30. Each backplane slave unit 22 transmits the command from the backplane master unit 12 to the extended module at the next stage via the serial backplane bus 30.

In this connection, when a current extended module (for example, the second extended module 20b) of a plurality of extended modules connected via the serial backplane bus 30 is detached or has an internal problem, a sequential command delivery to the next extended module may be not achieved.

When the second extended module 20b is unable to communicate, the following problems occur: the first extended module 20a receives and processes a command from the backplane master unit 12, and subsequently, the module 20a transmits the command of the backplane master unit 12 to the second extended module 20b at a next stage via the serial backplane bus 30. However, the second extended module 20b does not receive the command of the backplane master unit 12.

Furthermore, although the third extended module 30b at the next stage to the second extended module 20b can communicate, the module 30b does not receive the command of the backplane master unit 12 from the second extended module 20b. As a result, the module 30b cannot operate normally.

As described above, when communication of any one of the plurality of the extended modules connected via the serial backplane bus 30 made of a single bus is not enabled, the communication via the serial backplane bus 30 becomes totally disabled. Thus, there arises a problem that communication cannot be performed over the entire PLC system connected via the backplane bus 30. This has a very negative effect on the reliability of the PLC system.

### SUMMARY

An purpose of the present disclosure is to provide a serial backplane based PLC system with a hot swap function in which when an extended module fails during communication between the backplane master unit and the backplane slave unit, communication between the backplane master unit and the backplane slave unit via the backplane bus is maintained using a backplane design technique. In this connection, the hot swap function may refer to a function that allows the failed extended module to be replaced without interrupting a current PLC operation.

Another purpose of the present disclosure is to provide a serial backplane based PLC system with a hot swap function in which when the failed extended module is repaired and the replaced extended module is restarted, an entire PLC system may be operated without stopping.

The purposes of the present disclosure are not limited to the above-mentioned purposes. Other purposes and advantages of the present disclosure, as not mentioned above, may be understood from the following descriptions and more clearly understood from the embodiments of the present disclosure. Further, it will be readily appreciated that the objects and advantages of the present disclosure may be realized by features and combinations thereof as disclosed in the claims.

In one aspect of the present disclosure, there is provided a serial backplane-based programmable logic controller (PLC) system with a hot swap function, wherein the backplane is based on Ethernet communication, the system being characterized in that the system comprises: a central processor unit (CPU) module for transmitting an operation command; at least one extended module for receiving and processing the operation command; a backplane bus connected to a bus line for communication between the CPU module and the extended modules; and at least one backplane module connected to the backplane bus, wherein the at least one backplane module is physically detachably coupled to the at least one extended module, respectively.

In one embodiment, each of the CPU module and the at least one extended module includes a microprocessor unit (MPU) having a media access control layer (MAC), and a physical layer (PHY) to support the Ethernet communication.

In one embodiment, the CPU module includes a single Ethernet port (single MAC, single PHY) for supporting the Ethernet communication, wherein each of the extended modules includes at least two Ethernet ports (at least two MACs, at least two PHYs) for supporting the Ethernet communication.

In one embodiment, the backplane bus includes: an upper bus activated when normal communication between a corresponding extended module and a corresponding backplane module is available; and a lower bus activated when normal communication between a corresponding extended module and a corresponding backplane module is non-available.

In one embodiment, the upper bus includes: a front bus and a rear bus configured to enable communication between adjacent backplane modules ; and an input bus and an output bus configured to enable communication between a corresponding backplane module and a corresponding extended module.

In one embodiment, each of the backplane modules includes a switch configured for switching connection between a corresponding extended module and the backplane bus.

In one embodiment, when it is determined based on a communication enabled or disabled indication signal transmitted from a corresponding extended module that normal communication between the corresponding extended module and a corresponding backplane module is available, the switch is configured to activate an upper bus, wherein when it is determined based on a communication enabled or disabled indication signal transmitted from a corresponding extended module that normal communication between the corresponding extended module and a corresponding backplane module is non-available, the switch is configured to activate a lower bus.

In one embodiment, the upper bus connects corresponding backplane modules to corresponding extended modules respectively, wherein the operation command of the CPU module is transferred to MPUs of the extended modules via the upper bus, wherein the lower bus directly connect a front backplane module and a rear backplane module while bypassing a middle backplane module, such that the operation command of the CPU module is directly transferred from the front backplane module to the rear backplane module.

In one embodiment, the communication enabled or disabled indication signal is transmitted from a corresponding extended module to a corresponding backplane module to inform that communication of the corresponding extended module is non-available due to a detached state or an internal failure of the corresponding extended module.

In one embodiment, the communication enabled or disabled indication signal is transmitted from the corresponding extended module to the corresponding backplane module at a predetermined time period, wherein when the communication enabled or disabled indication signal is not transmitted by the corresponding backplane module, the corresponding backplane module determines that the corresponding extended module is detached or has an internal failure and that communication thereof is non-available.

In accordance with the present disclosure, even when the extended module is detached or damaged, the entire PLC system may be operated without interruption by switching between backplane buses.

Thus, without interrupting the operation of the PLC system, the failed extended module may be replaced or removed. This improves the reliability of the PLC system.

Further specific effects of the present disclosure as well as the effects as described above will be described in conduction with illustrations of specific details for carrying out the invention.

### BRIEF DESCRIPTION OF DRAWINGS

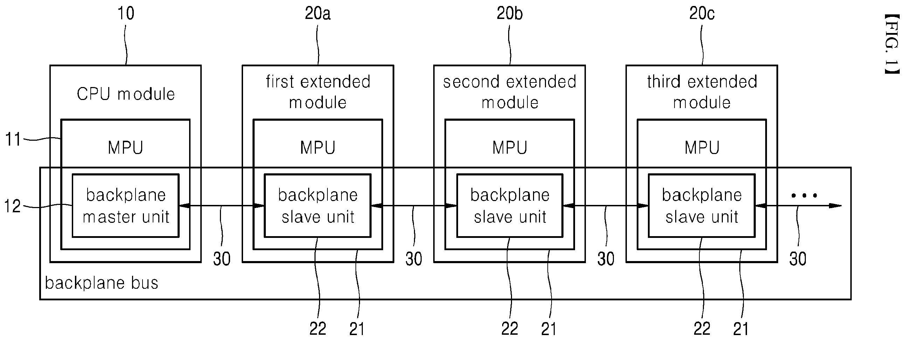

Figure 1 shows a configuration diagram of a conventional backplane-based PLC system.
Figure 2 shows a configuration diagram to illustrate a problem occurring in the backplane-based PLC system of Figure 1.

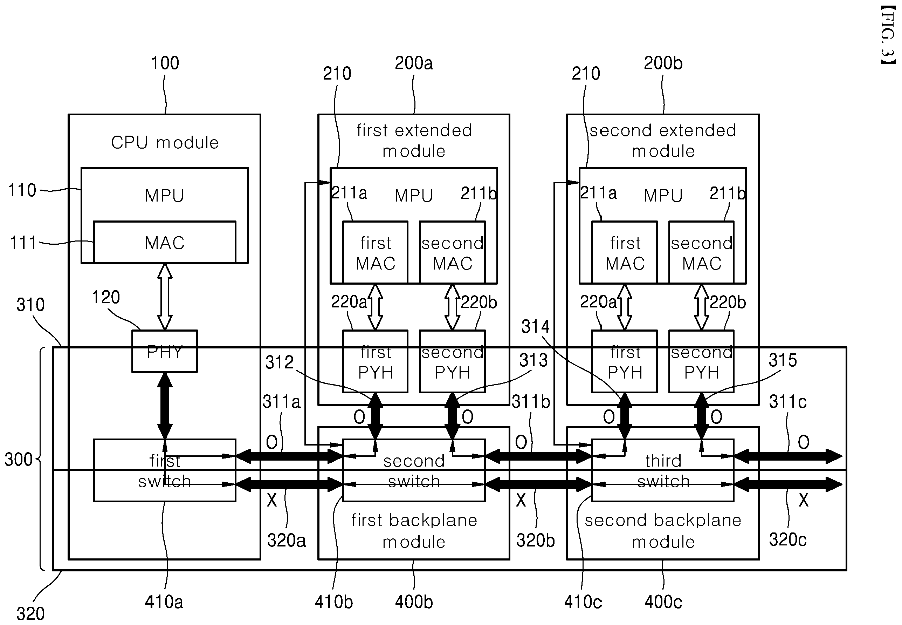

Figure 3 shows a configuration diagram of a backplane-based PLC system with a hot swap function with an Ethernet-based PLC backplane configuration according to one embodiment of the present disclosure.

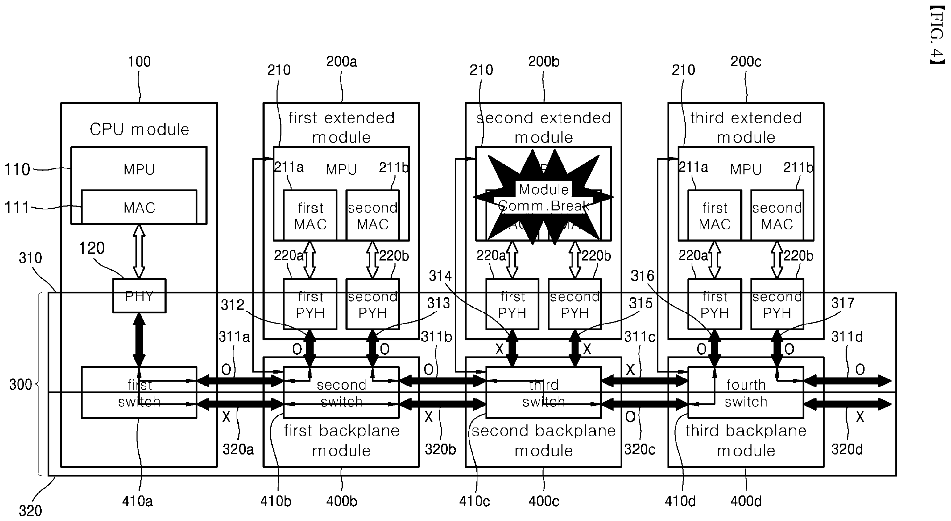

Figure 4 shows a configuration diagram to illustrate a scheme of ensuring an normal operation of a backplane in an event of an extended module failure in the backplane-based PLC system with a hot swap function with an Ethernet-based PLC backplane configuration as shown in FIG. 3.

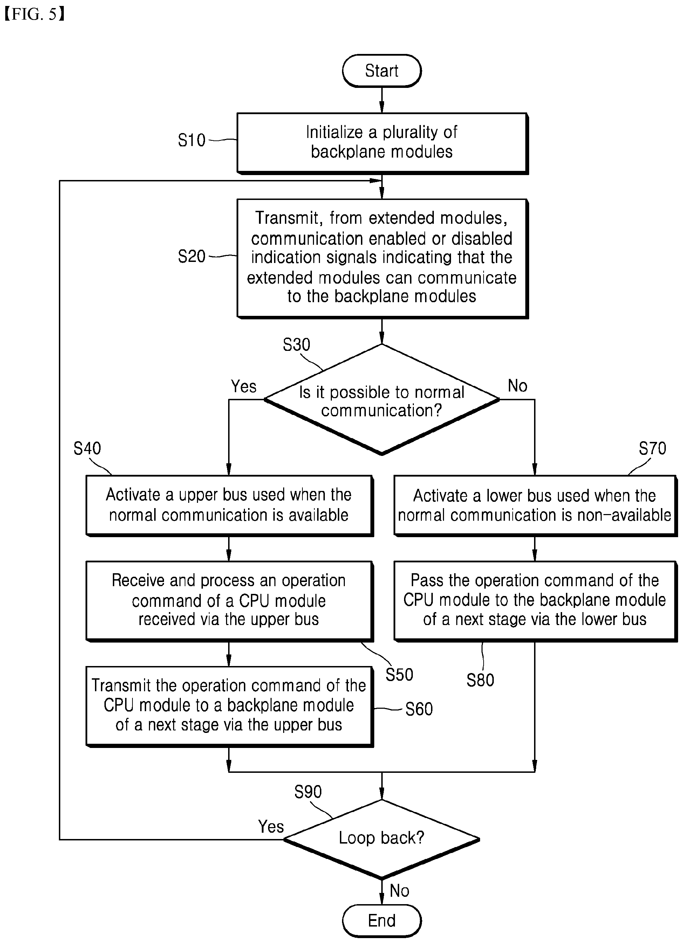

Figure 5 is a flowchart for illustrating an operation of the backplane-based PLC system with a hot swap function according to an embodiment of the present disclosure.

### DETAILED DESCRIPTION

The above objects, features and advantages will become apparent from the detailed description with reference to the accompanying drawings. Embodiments are described in sufficient detail to enable those skilled in the art in the art to easily practice the technical idea of the present disclosure. Detailed descriptions of well-known functions or configurations may be omitted in order not to unnecessarily obscure the gist of the present disclosure. Hereinafter, embodiments of the present disclosure will be described in detail with reference to the accompanying drawings. Throughout the drawings, like reference numerals refer to like elements.

Referring to FIGS. 3 to 5, a backplane-based PLC system with a hot swap function having an Ethernet-based PLC backplane configuration according to some embodiments of the present disclosure is illustrated. For reference, in a technique of hot-swapping the extended module of the serial backplane as illustrated in embodiments below, an example using Ethernet communication to allow the extended modules 200a 200b and 200c and the backplane modules 400b 400c and 400d to be independently configured and be detached independently from each other is illustrated. That is, the Ethernet communication is employed for communication between the extended modules 200a 200b and 200c, and the backplane module 400b 400c and 400d, which are independently configured and are detached independently from each other.

In a preferred embodiment, in order to utilize the Ethernet communication, each of the plurality of extended modules 200a 200b and 200c has a MAC (microcontroller unit) 210 having a media access control layer (MAC) 211a and 211b and a physical layer (PHY) 220a and 220b for supporting Ethernet communication. Basically, the MPU that supports Ethernet function is required for Ethernet communication. The MPU supporting the MAC performs communication using an Ethernet PHY (physical layer), a transformer, and an RJ45. However, in the Ethernet-based backplane communication according to the present disclosure, the transformer and the RJ45 are excluded, and, rather, the communication between the backplane master unit and the backplane slave unit may be realized using the PHY-TO-PHY communication.

However, the core concept of the present disclosure is not based on the use of the Ethernet communication. Instead, the core technical idea of the present disclosure is as follows: the extended modules 200a 200b and 200c and the backplane modules 400b 400c and 400d are independently configured and are detachable independently of each other; the backplane bus 300 is connected via the backplane modules 400b 400c and 400d; and a signal to be transmitted to the extended modules 200a 200b and 200c are transmitted via the backplane modules 400b 400c and 400d thereto; thus, this allows the failed extended module to be replaced or disconnected without interrupting the operation of the PLC system.

Therefore, as long as the core technical idea of the present disclosure can be realized, the communication protocol between the extended modules 200a 200b and 200c and the backplane modules 400b 400c and 400d, which are independently configured, may employ not only the Ethernet but also any communication protocols already known. Further, based on the communication protocol as used, an internal port type or a supported element in the PLC system may be easily modified.

As used herein, an example in which the communication protocol used is an Ethernet protocol is exemplified for ease of illustration. However, the present disclosure is not limited thereto.

Basically, the MPU that supports Ethernet function is required for Ethernet communication. The MPU supporting the MAC performs communication using an Ethernet PHY (physical layer), a transformer, and an RJ45. However, in the Ethernet-based backplane communication according to the present disclosure, the transformer and the RJ45 are excluded, and, rather, the communication between the backplane master unit and the backplane slave unit may be realized using the PHY-TO-PHY communication.

Figure 3 shows a configuration diagram of a backplane-based PLC system with a hot swap function with an Ethernet-based PLC backplane configuration according to one embodiment of the present disclosure.

As shown in Figure 3, a backplane-based PLC system with a hot swap function may include a single CPU module 100 including a MPU 110 having a MAC 111 and a PHY 120 to support Ethernet communication; a plurality of extended modules 200a and 200b, each including a MPU 210 having MACs 211a and 211b and PHYs 220a and 220b to support Ethernet communication; a backplane bus 300 connected to a bus line for communication between the plurality of extended modules 200a and 200b and single CPU module 100; and a plurality of backplane modules 400b and 400c connected to the backplane bus 300, wherein the plurality of backplane modules 400b 400c are physically separated from the plurality of extended modules 200a and 200b respectively, wherein the plurality of backplane modules 400b and 400c respectively have switches 410b and 410c for switching connection between the mounted extended modules and the backplane bus respectively.

In this connection, the CPU module 100 does not include the backplane module 400b and 400c. The CPU module 100 integrally includes a switch 410a for switching connection between the neighboring extended module 200a and the backplane bus 300. The CPU module 100 controls all the extended modules 200a and 200b. Therefore, when the CPU module 100 fails, the entire PLC system is interrupted. Therefore, it is useless to replace the failed CPU module 100 in a detachable manner as in the extended modules 200a and 200b.

The CPU module 100 has a single Ethernet port MAC, PHY for supporting Ethernet communication. Each of the extended modules 200a and 200b has at least two Ethernet ports MACs, PHYs for supporting Ethernet communication for daisy chain configuration. In this connection, each of the MACs 111, 211a and 211b is located inside the MPU and indicates an Ethernet MAC address. Each of the PHYs 120, 220a, and 220b is located outside the MPU 110 and represents Ethernet-PHY conversion.

In one example, the Ethernet port is embedded within each of the extended modules 200a and 200b. The Ethernet port has a logical configuration in which input and output individually occur and is implemented as at least two ports. Alternatively, the Ethernet port may have a single physical configuration in which the input and the output occur via the same port, and in this case, may be implemented as one port.

Further, the backplane bus 300 includes an upper bus 310 used when it is determined that normal communication is enabled based on a communication enabled or disabled indication signal transmitted from the MPU 210 of the extended module, and a lower bus 320 used when it is determined that normal communication is disabled based on the communication enabled or disabled indication signal transmitted from the MPU 210 of the extended module. That is, the upper bus 310 is used when it is determined that there is no failure in the extended module 200a 200b or the backplane module 400b 400c based on the communication enabled or disabled indication signal. The lower bus 320 is used when a failure is detected in the extended module 200a 200b or the backplane module 400b 400c based on an communication enabled or disabled indication signal.

In this connection, the upper bus 310 includes a front bus 311a and a rear bus 311b that enable communication between the backplane modules 400b 400c located next to each other, and an input bus 312 and an output bus 313 for enabling communication between each of the backplane modules 400b and 400c and each of the extended module 200a and 200b. For reference, in the first extended module 200a, the front bus has a reference numeral 311a, and the rear bus has a reference numeral 311b. In one example, in the second extended module 200b, the front bus has a reference numeral 311b, and the rear bus has a reference numeral 311c.

The upper bus 310 and the lower bus 320 or the input bus 312 and the output bus 313 include two buses to illustrate that there are two channel lines for command signal transmission. However, this is only one embodiment. The upper bus 310 and the lower bus 320 or the input bus 312 and the output bus 313 may be switched to be connected to the corresponding extended module 200a or 200b by a switch 410b or 410c provided in the backplane module 400a or 400b (normal communication). Alternatively, the upper bus 310 and the lower bus 320 or the input bus 312 and the output bus 313 may be switched by the switch 410b or 410c to bypass to the backplane module 400c at a next stage (abnormal communication). Then, the backplane bus 300 with one bus may implement the same configuration as that having the two channel lines.

Figure 4 shows a configuration diagram to illustrate a scheme of ensuring an normal operation of a backplane in an event of an extended module failure in the backplane-based PLC system with a hot swap function with an Ethernet-based PLC backplane configuration as shown in FIG. 3.

As shown in FIG. 4, first, the CPU module 100 transmits, via Ethernet ports (MAC and PHY) 111 and 120, an operation command to the backplane modules 400b, 400c and 400d connected via the backplane bus 300. In this connection, the Ethernet ports are provided in the CPU module 100 to support Ethernet communication.

Each of the extended modules 200b, 200c and 200d is waiting for a command of the CPU module 100. Each of the extended modules 200b, 200c and 200d sequentially receives and processes the operation command of the CPU module 100 via the backplane bus 300. Each of the extended modules 200b, 200c and 200d transmits the operation command of the CPU module 100 to the extended module at the next stage via the backplane bus 300.

In this connection, it may be assumed that an extended module (for example, the second extended module 200b) of a plurality of extended modules connected via the backplane bus 300 is detached or has an internal failure, thereby becoming a communication disabled state while the remaining extended modules are available for communication.

First, the MCU 210 of the first extended module 200a transmits to the second switch 410b a communication enabled or disabled indication signal indicating a communication availability of the first extended module 200a. Then, the second switch 410b determines whether normal communication with the first extended module 200a is available based on the communication enabled or disabled indication signal transmitted from the MPU 210. In this connection, the second switch 410b is provided inside the first backplane module 400b.

When it is determined by the second switch 410b that the normal communication with the first extended module 200a is available based on the communication enabled or disabled indication signal, the second switch 410b performs a switching operation so that communication can be performed via the upper bus 311a. In this connection, the upper bus 311a is a component of the backplane bus 300 used when the normal communication is available.

Accordingly, when the operation command of the CPU module 100 is transmitted to the first backplane module 410b via the upper bus 311a, the first extended module 200a performs Ethernet communication via first Ethernet ports (MAC, PHY) (220a -> 211a -> 211b -> 220b) to receive and process the operation command of the CPU module 100.

Then, the operation command of the CPU module 100 processed by the first extended module 200a is transferred to the second extended module 200b of the next stage via the upper bus 311b of the backplane bus 300 by switching of the second switch 410b.

The second extended module 200b located at the next stage is detached or has an internal failure, thereby being in a communication disabled state. Accordingly, the MPU 210 of the second extended module 200b transmits a communication enabled or disabled indication signal to the third switch 410c indicating that the module 200b is in the communication disabled state. In this connection, the third switch 410c is provided inside the second backplane module 400c.

The third switch 410c determines that normal communication with the second extended module 200b is non-available based on the communication enabled or disabled indication signal transmitted from the MPU 210 of the second extended module 200b. Thus, the third switch 410c performs a switching operation so that communication via the lower bus 320c of the backplane bus 300, which is used when the normal communication is non-available, may be performed.

Accordingly, when the operation command of the CPU module 100 is transferred to the second backplane module 410c via the switched lower bus 320c, the operation command of the CPU module 100 transmitted from the first extended module 200a is not transmitted to the second extended module 200b. Instead, the operation command of the CPU module 100 is directly transmitted to the third backplane module 400d corresponding to the third extended module 200c located in the next stage.

In this manner, the second extended module 200b does not receive the operation command of the CPU module 100. The operation command of the CPU module 100 bypasses the second extended module 200b and is directly transferred from the first extended module 200a to the third extended module 200c.

In this connection, as described above, the second extended module 200b, which is not capable of normal communication, is connected to the first extended module 200a in front thereof via the upper bus 311b used in the normal communication of the backplane bus 300 connected to the second backplane module 400c. The second extended module 200b is connected to the third extended module 200c in rear thereof via the lower bus 320c used in the case where the normal communication is non-available.

Next, the MCU 210 of the third extended module 200c transmits, to the fourth switch 410d, a communication enabled or disabled indication signal indicating that the module 200c can communicate. The fourth switch 410d determines that normal communication with the third extended module 200c is available based on the communication enabled or disabled indication signal transmitted from the MPU 210. The fourth switch 410d is provided inside the third backplane module 400.

Accordingly, the fourth switch 410d performs a switching operation so that communication via the lower bus 320c may be performed. In this connection, the lower bus 320c is a component of the backplane bus 300 used when normal communication is non-available.

Then, when the operation command of the CPU module 100 is transmitted to the third backplane module 410d via the lower bus 320c, the third extended module 200c performs Ethernet communication via third Ethernet ports (MAC, PHY) (220a -> 211a -> 211b -> 220b) to receive and process the operation command of the CPU module 100.

Then, the operation command of the CPU module 100 processed by the third extended module 200c is transferred to a fourth extended module (not shown) of a next stage via the upper bus 311d of the backplane bus 300 by switching of the fourth switch 410d.

Hot swapping the extended modules 200a, 200b and 200c and the backplane modules 400b 400c and 400d may allow the operation of the entire PLC system to be continuously operated without interruption even when the extended module is detached and has a fault. Further, in a conventional PLC system, when an extended module fails, the entire PLC system is stopped. However, according to the present disclosure, an extended module can be replaced or removed without interruption of the PLC system. This may increase the reliability of the LC system.

Figure 5 is a flowchart for illustrating an operation of the backplane-based PLC system with a hot swap function according to an embodiment of the present disclosure.

A backplane-based PLC system having a hot swap function having an Ethernet-based PLC backplane configuration includes a plurality of extended modules 200a, 200b, and 200c, and a plurality of backplane modules 400b, 400c and 400d physically detachable respectively from a plurality of extended modules 200a, 200b, and 200c. The backplane modules 400b, 400c and 400d are connected to a backplane bus 300. The backplane modules 400b 400c and 400d include respective switches 410b, 410c and 410d for switching connection between respective extended modules and the backplane bus. The corresponding backplane modules 400b 400c and 400d connect the corresponding extended module 200a, 200b and 200c to the backplane bus 300. In this connection, the communication between the corresponding extended modules 200a, 200b, and 200c and the corresponding backplane modules 400b, 400c and 400d is accomplished via Ethernet communication in the preferred embodiment.

Referring to Figure 5, a method for operating the backplane-based PLC system with a hot swap function according to an embodiment of the present disclosure will be illustrated. First, the method initializes the plurality of backplane modules 400b, 400c, and 400d connected via a backplane bus 300 S10. This initialization is to configure the backplane modules that operate on Ethernet basis to enable normal communication.

Then, the MCU 210 of the extended modules 200a, 200b and 200c transmits a communication enabled or disabled indication signal indicating that the modules can communicate to the switches 410b, 410c, and 410d provided in the backplane modules 400b, 400c and 400d. In this connection, to inform that the extended modules 200a 200b and 200c are detached or have an internal fault, the communication enabled or disabled indication signal is transmitted from the extended modules 200a, 200b and 200c to the backplane modules 400b, 400c and 400d.

In one example, when the extended modules 200a, 200b and 200c have an internal failure, an error signal may be passed to the backplane modules 400b, 400c and 400d. However, when the extended modules 200a, 200b and 200c are detached and electrically disconnected, the extended modules 200a, 200b and 200c cannot transmit signals to the backplane modules 400b, 400c and 400d. Accordingly, the communication enabled or disabled indication signal may be normally transmitted to the backplane modules 400b, 400c and 400d at a predetermined time period. When the extended modules 200a, 200b and 200c are detached and electrically disconnected, the communication enabled or disabled indication signal which has been previously transmitted to the backplane module 400b 400c and 400d at a predetermined time period is no longer transmitted. Accordingly, when the extended modules 200a 200b and 200c are detached and electrically disconnected, the backplane modules 400b 400c and 400d determine that an error has occurred in the extended modules 200a 200b and 200c.

The method determines whether communication is available between the extended modules 200a, 200b and 200c and the backplane modules 400b, 400c and 400d based on the communication enabled or disabled indication signals as transmitted S30.

When it is determined that mutual communication is available S30, the switches 410b 410c, and 410d are switched so that communication via the upper bus 310 may be performed S40. In this connection, the switches 410b, 410c and 410d are provided inside the backplane modules 400b 400c and 400d. The upper bus 310 is a component of the backplane bus 300 used when normal communication is available. Further, the input and output buses 311 to 317 are buses connecting the backplane modules 400b, 400c and 400d and the extended modules 200a, 200b and 200c to each other via Ethernet communication. The operation command of the CPU module 100 received via the upper bus 310 is transmitted and outputted to and from the MPUs 210 in the extended modules 200a, 200b and 200c via Ethernet ports (MAC, PHY) (220a -> 211a -> 211b -> 220b).

In one example, when it is again determined that normal communication is available, the switches 410b, 410c and 410d perform the switching operation so that the activated bus is changed from the lower bus 320 to the upper bus 310. A case when the normal communication is again enabled may include a case when the failed extended module 200a, 200b or 200c is replaced with new one.

Further, When the normal communication is still available, the activated bus is the upper bus 310 and thus the switches 410b, 410c and 410d maintain the current connection state.

Then, the extended modules 200a, 200b and 200c receive and process the operation command of the CPU module 100 transmitted via the upper bus 310 using the Ethernet communication with the backplane modules 400b, 400c and 400d S50.

Then, the extended modules 200a, 200b or 200c transmit the operation command of the CPU module 100 to the backplane modules 400b, 400c or 400d of the next stage via the upper bus 310 of the backplane bus 300 S60.

In one example, when it is determined based on the determination result in S30 that the normal communication is not available, the switch 410 performs a switching operation so that communication via the lower bus 320 may be performed S70. In this connection, the switch 410 is provided inside each of the backplane modules 400b, 400c and 400d. The lower bus 320 is used when the normal communication is not available. The lower bus 320 is configured not to transfer the operation command of the CPU module 100 from the front backplane module 400b, 400c or 400d (e.g., the first backplane module 400b) to the corresponding backplane module 400b, 400c or 400d (e.g., the second backplane module 400c). Rather, the lower bus 320 is configured to directly transfer the operation command of the CPU module 100 from the front backplane module 400b, 400c or 400d (e.g., the first backplane module 400b) to the rear backplane module 400b, 400c or 400d (e.g., the third backplane module 400d) while bypassing the corresponding backplane module 400b, 400c or 400d (e.g., the second backplane module 400c).

In one example, when the normal communication is available and then the normal communication is made non-available due to separation or failure of the extended module 200a 200b or 200c, the switching operation is performed by the switch 410 so that the activated bus is changed from the upper bus 310 to the lower bus 320. Further, when the normal communication continues to be non-available, and the lower bus 320 is being activated, the switch may maintain the current connection state.

Thus, the switch passes the operation command of the CPU module 100 to the backplane module 400b, 400c or 400d of a next stage via the lower bus 320 S80. Then, the operation command of the CPU module 100 is transmitted to all of the backplane modules 400b, 400c and 400d connected to the backplane bus 300 and then all of the extended modules 200a, 200b and 200c. A loopback operation shown in the figure is an operation for maintaining the current operation while the PLC system is operating normally. The above-described process is repeated to maintain the normal operation.

According to the present disclosure, the switch 410 may also perform the hot swap of the extended modules 200a, 200b and 200c and the backplane modules 400b, 400c and 400d. The hot swapping of the extended modules 200a, 200b and 200c and the backplane modules 400b 400c and 400d may allow the operation of the entire PLC system to be continuously operated without interruption even when the extended module is detached and has a fault. Further, in a conventional PLC system, when an extended module fails, the entire PLC system is stopped. However, according to the present disclosure, an extended module can be replaced or removed without interruption of the PLC system. This may increase the reliability of the LC system.

Although the embodiments according to the present disclosure have been described above, they are merely illustrative. It will be understood by those skilled in the art that various changes and modifications may be made without departing from the scope of the present invention. Therefore, the true scope of technical protection of the present disclosure should be determined by the following claims.

## Claims

1. A serial backplane-based programmable logic controller (PLC) system with a hot swap function, wherein the backplane is based on Ethernet communication, the system being **characterized in that** the system comprises:
a central processor unit (CPU) module 100 for transmitting an operation command;
at least one extended module 200a, 200b, and 200c for receiving and processing the operation command;
a backplane bus 300 connected to a bus line for communication between the CPU module 100 and the extended modules 200a, 200b and 200c; and
at least one backplane module 400b, 400c and 400d connected to the backplane bus 300, wherein the at least one backplane module 400b, 400c and 400d is physically detachably coupled to the at least one extended module 200a, 200b and 200c, respectively.

2. The system of claim 1, wherein each of the CPU module 100 and the at least one extended module 200a, 200b and 200c includes a microprocessor unit (MPU) having a media access control layer (MAC), and a physical layer (PHY) to support the Ethernet communication.

3. The system of claim 2, wherein the CPU module 100 includes a single Ethernet port (single MAC, single PHY) for supporting the Ethernet communication,
wherein each of the extended modules 200a, 200b and 200c includes at least two Ethernet ports (at least two MACs, at least two PHYs) for supporting the Ethernet communication.

4. The system of claim 1, wherein the backplane bus 300 includes:
an upper bus 310 activated when normal communication between a corresponding extended module 200a, 200b or 200c and a corresponding backplane module 400b, 400c or 400d is available; and
a lower bus 320 activated when normal communication between a corresponding extended module 200a, 200b or 200c and a corresponding backplane module 400b, 400c or 400d is non-available.

5. The system of claim 4, wherein the upper bus 310 includes:
a front bus 311a and a rear bus 311b configured to enable communication between adjacent backplane modules 400b, 400c and 400d; and
an input bus 312 and an output bus 313 configured to enable communication between a corresponding backplane module 400a, 400b or 400c and a corresponding extended module 200a, 200b or 200c.

6. The system of claim 1, wherein each of the backplane modules 400b, 400c and 400d includes a switch 410 configured for switching connection between a corresponding extended module 200a, 200b or 200c and the backplane bus 300.

7. The system of claim 6, wherein when it is determined based on a communication enabled or disabled indication signal transmitted from a corresponding extended module 200a, 200b or 200c that normal communication between the corresponding extended module 200a, 200b or 200c and a corresponding backplane module 400b, 400c or 400d is available, the switch 410 is configured to activate an upper bus 310,
wherein when it is determined based on a communication enabled or disabled indication signal transmitted from a corresponding extended module 200a, 200b or 200c that normal communication between the corresponding extended module 200a, 200b or 200c and a corresponding backplane module 400b, 400c or 400d is non-available, the switch 410 is configured to activate a lower bus 320.

8. The system of claim 7, wherein the upper bus 310 connects corresponding backplane modules 400b, 400c and 400d to corresponding extended modules 200a, 200b and 200c respectively, wherein the operation command of the CPU module 100 is transferred to MPUs of the extended modules 200a 200b and 200c via the upper bus 310,
wherein the lower bus 320 directly connect a front backplane module 400b and a rear backplane module 400d while bypassing a middle backplane module 400c, such that the operation command of the CPU module 100 is directly transferred from the front backplane module 400b to the rear backplane module 400d.

9. The system of claim 7, wherein the communication enabled or disabled indication signal is transmitted from a corresponding extended module 200a, 200b or 200c to a corresponding backplane module 400b, 400c or 400d to inform that communication of the corresponding extended module 200a, 200b or 200c is non-available due to a detached state or an internal failure of the corresponding extended module 200a 200b or 200c.

10. The system of claim 9, wherein the communication enabled or disabled indication signal is transmitted from the corresponding extended module 200a, 200b or 200c to the corresponding backplane module 400b, 400c or 400d at a predetermined time period,
wherein when the communication enabled or disabled indication signal is not transmitted by the corresponding backplane module 400b 400c or 400d, the corresponding backplane module 400b, 400c or 400d determines that the corresponding extended module 200a, 200b or 200c is detached or has an internal failure and that communication thereof is non-available.
